# EUROPEAN PATENT APPLICATION

(11) **EP 3 226 532 A1**
(43) Date of publication of application: **04.10.2017**
(21) Application number: 17163730.9
(22) Date of filing: 30.03.2017
(51) Int. Cl.: H04N 1/405, H04N 1/52

(54) **IMAGE PROCESSING APPARATUS AND IMAGE PROCESSING METHOD**

(30) Priority: 31.03.2016 JP 2016073216
(71) Applicant: Funai Electric Co., Ltd., Daito Osaka 574-0013 (JP)
(72) Inventor: TOSHIHIRO, Shunsaku, Daito, Osaka 574-0013 (JP)
(74) Representative: Becker Kurig Straus

(57) **Abstract**

An image processing apparatus (2) capable of improving image quality of binarized image data is provided. The image processing apparatus (2) includes a generation part (10) that generates a binarized image data (4). The binarized image data (4) comprises a first cell, containing a first dot pattern in which an outside pixel density is higher than an inside pixel density; and a second cell, containing a second dot pattern in which an inside pixel density is higher than an outside pixel density.

## Description

### BACKGROUND OF THE INVENTION

### Field of the Invention

The invention relates to an image processing apparatus and an image processing method for generating binarized image data.

### Description of the Related Art

In a printing apparatus such as a laser printer, a halftone process by dithering, for example, is known as a method for spuriously expressing a continuous tone. In the halftone process by dithering, by replacing each part of multitone original image data with halftone dots (dot pattern) having an area corresponding to a tone value, binarized image data is generated in which a large number of halftone dots are formed (e.g., see Patent Document 1: Japanese Patent Publication No. 2007-67984). The halftone dots (dot pattern) are formed in each of a plurality of cells arranged in a matrix in the binarized image data. Such halftone process spuriously expresses a continuous tone by changing the area of the halftone dots without changing the number of the halftone dots, and is thus also referred to as an amplitude modulated (AM) halftone process.

In a conventional halftone process, if a tone value of each of all pixels contained in a predetermined region in the original image data changes from a highlight side to a shadow side, each of the large number of halftone dots formed in the binarized image data grows from inside toward outside of the cell in a constant step cycle.

### SUMMARY OF THE INVENTION

However, in the conventional halftone process, there is a problem that a feeling of roughness may occur in the printed binarized image data, which is a main cause of image quality deterioration.

The disclosure aims to solve the aforementioned problem, and provides an image processing apparatus and an image processing method which are capable of, when converting multitone original image data into binarized image data, improving image quality of the binarized image data after conversion.

In one embodiment, an image processing apparatus is provided, including a generation part configured to generate a binarized image data. The binarized image data comprises a first cell, containing a first dot pattern in which an outside pixel density is higher than an inside pixel density; and a second cell, containing a second dot pattern in which an inside pixel density is higher than an outside pixel density.

According to one embodiment, in the above image processing apparatus, in the binarized image data, the first dot pattern and the second dot pattern are alternately arranged.

According to one embodiment, in the above image processing apparatuses, in the binarized image data, the first dot pattern and the second dot pattern are arranged adjacent to each other in a row direction and a column direction.

According to one embodiment, in the above image processing apparatuses, the binarized image data contains a plurality of the first dot patterns, and the first dot patterns are arranged at substantially 45°.

According to one embodiment, in the above image processing apparatuses, the binarized image data contains a plurality of the second dot patterns, and the second dot patterns are arranged at an substantially 45°.

According to one embodiment, in the above image processing apparatuses, the binarized image data contains a plurality of the first dot patterns, and the first dot patterns are arranged in point symmetry.

According to one embodiment, in the above image processing apparatuses, the binarized image data contains a plurality of the second dot patterns, and the second dot patterns are arranged in point symmetry.

According to one embodiment, in the above image processing apparatuses, the first dot pattern formed in the first cell has a substantially circular shape.

According to one embodiment, in the above image processing apparatuses, a region other than the second dot pattern formed in the second cell is a substantially circular shape.

In another embodiment, an image processing apparatus is provided, comprising an acquisition part, configured to acquire a multitone original image data; and a generation part, configured to divide the multitone original image data into a plurality of regions, to generate a binarized image data based on a plurality of dither matrices of multiple types having different threshold value arrangements in each of the regions.

According to one embodiment, in the above image processing apparatuses, the binarized image data has a plurality of cells respectively corresponding to the plurality of the regions. The dither matrices comprise a first dither matrix and a second dither matrix. The first dither matrix forms a first dot pattern that grows from an inside toward an outside of the cell when the tone value of each of all the pixels contained in the region changes from the highlight side to the shadow side. The second dither matrix forms a second dot pattern that grows from the outside toward the inside of the cell when the tone value of each of all the pixels contained in the region changes from the highlight side to the shadow side.

According to one embodiment, in the above image processing apparatuses, based on the plurality of the dither matrices, the generation part generates the binarized image data in which a plurality of dot patterns of multiple types are formed. When tone values of all pixels contained in the region change respectively from a highlight side to a shadow side, each of the plurality of the dot patterns grows in different manners from each other.

According to one embodiment, in the above image processing apparatuses, the plurality of the cells are arranged in a matrix. And, a plurality of the first dot patterns and a plurality of the second dot patterns are alternately arranged side by side in a row direction and a column direction of the plurality of cells.

According to still another embodiment, an image processing method for generating a binarized image data is provided, comprising acquiring a multitone original image data; and dividing the multitone original image data into a plurality of regions, and carrying out a halftone process in each of the regions using any of a plurality dither matrices of multiple types having different threshold value arrangements, to generate the binarized image data.

According to the above apparatuses or method, in binarized image data, due to a combination of a distance between adjacent dot patterns and a dot pattern shape, the feeling of roughness that occurs in the binarized image data may become stronger. As in the conventional halftone process explained in the part "Description of the Related Art," if each of the large number of dot patterns grows from inside toward outside of the cell in a constant step cycle, since the combination of the distance between adjacent dot patterns and the dot pattern shape in the binarized image data is limited, the feeling of roughness that occurs in the binarized image data may become stronger.

With respect to this, according to the present embodiment, the generation part carries out the halftone process in each of the regions using any of a plurality of dither matrices of multiple types having different threshold value arrangements. Accordingly, since a plurality of dot patterns of multiple types may be formed in the binarized image data, it becomes possible to generate a plurality of types of combinations of the distance between adjacent dot patterns and the dot pattern shape in the binarized image data. As a result, the feeling of roughness that occurs in the binarized image data can be suppressed, and image quality of the binarized image data can be improved.

According to the present embodiment, the plurality of the dot patterns of multiple types growing in different manners from each other are formed in the binarized image data. Accordingly, since types of the combination of the distance between adjacent dot patterns and the dot pattern shape in the binarized image data can be increased, the feeling of roughness that occurs in the binarized image data can be suppressed.

According to the present embodiment, if the tone value of each of all the pixels contained in the region changes from the highlight side to the shadow side, the first dot pattern grows from the inside toward the outside of the cell, and the second dot pattern grows from the outside toward the inside of the cell. Accordingly, the first dot pattern and the second dot pattern can grow in different manners from each other.

According to the present embodiment, an adjacent pair of first dot patterns (or second dot patterns) are arranged side by side in the direction inclined 45° with respect to the row direction and the column direction respectively of the plurality of cells. By such an arrangement, the feeling of roughness that occurs in the binarized image data can be more effectively suppressed, and the image quality of the binarized image data can be more effectively improved.

According to the present embodiment, the halftone process is carried out in each of the regions using any of the plurality of the dither matrices of multiple types having different threshold value arrangements. Accordingly, since the plurality of the dot patterns may be formed in the binarized image data, the distance between adjacent dot patterns and a dot pattern shape in the binarized image data can be changed. As a result, the feeling of roughness that occurs in the binarized image data can be suppressed, and image quality of the binarized image data can be improved.

Moreover, the disclosure can be realized not only as an image processing apparatus including such a featured processing part, but also as an image processing method including, as a step, a process carried out by the featured processing part included in the image processing apparatus. In addition, the disclosure can also be realized as a program for making a computer function as the featured processing part included in the image processing apparatus, or a program of making a computer carry out a featured step included in the image processing method. It goes without saying that such program can be distributed through a computer readable non-transitory recording medium such as a compact disc read-only memory (CD-ROM) or a communication network such as the Internet.

According to the image processing apparatus according to an embodiment of the invention, the image quality of the binarized image data can be improved.

### BRIEF DESCRIPTION OF THE DRAWINGS

FIG. 1 is a block diagram showing a functional configuration of a printing apparatus according to an embodiment.
FIGs. 2A to 2B show an example of a halftone process performed by the printing apparatus according to an embodiment.
FIG. 3A shows an example of a first dither matrix according to an embodiment.
FIG. 3B shows an example of a second dither matrix according to an embodiment.
FIGs. 4A to 4F show a manner of growth of a first halftone dot according to an embodiment.
FIGs. 5A to 5F show a manner of growth of a second halftone dot according to an embodiment.
FIG. 6 is a flowchart showing a flow of a process performed by the printing apparatus according to an embodiment.
FIG. 7A shows an example of binarized image data generated by carrying out the halftone process according to an embodiment on original image data in uniformly light gray and having a tone value of "200."
FIG. 7B shows an example of binarized image data generated by carrying out the halftone process according to an embodiment on original image data in uniformly slightly dark gray and having a tone value of "100."
FIG. 7C shows an example of binarized image data generated by carrying out the halftone process according to an embodiment on original image data in uniformly dark gray and having a tone value of "72."
FIG. 7D shows an example of binarized image data generated by carrying out the halftone process according to an embodiment on original image data having a gradation pattern having a tone value continuously changing from "0" to "255."

### DESCRIPTION OF THE EMBODIMENTS

Hereinafter, embodiments of the disclosure are explained in detail using the drawings. Moreover, all of the embodiments explained hereinafter show general or specific examples. The numerical values, shapes, materials, components, arrangement positions and connection forms of the components, steps and order of the steps shown in the following embodiments are examples and do not intend to limit the invention. In addition, among the components in the following embodiments, the components not recited in the independent claims are explained as arbitrary components.

### Embodiments

### 1-1. Functional Configuration of Printing Apparatus

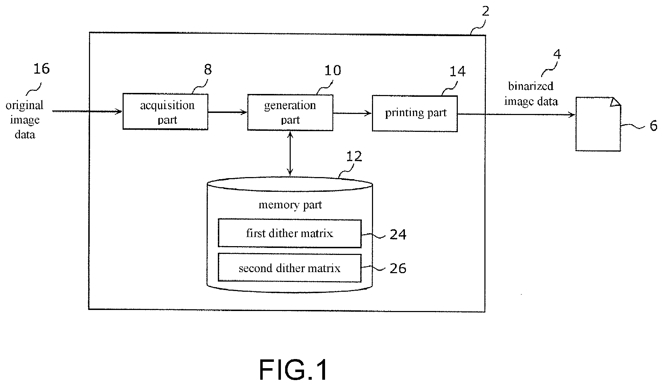

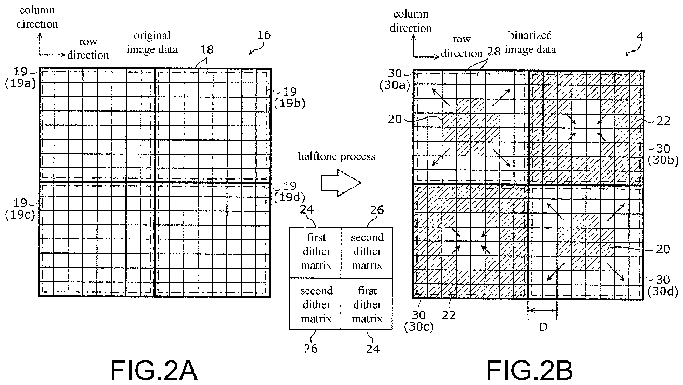

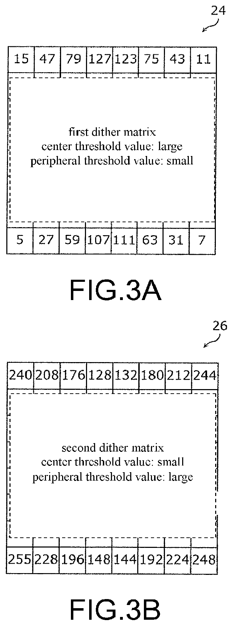

First of all, a functional configuration of a printing apparatus 2 according to an embodiment is explained with reference to FIG. 1 to FIG. 3B. FIG. 1 is a block diagram showing the functional configuration of the printing apparatus 2 according to an embodiment. FIGs. 2A to 2B show an example of a halftone process performed by the printing apparatus 2 according to an embodiment. FIG. 3A shows an example of a first dither matrix 24. FIG. 3B shows an example of a second dither matrix 26.

The printing apparatus 2 (an example of an image processing apparatus) according to an embodiment is, for example, a laser printer for printing binarized image data 4 onto a paper 6. As shown in FIG. 1, the printing apparatus 2 includes an acquisition part 8, a generation part 10, a memory part 12 and a printing part 14. Moreover, the printing apparatus 2 is connected to an external terminal apparatus (e.g., a personal computer or the like) (not illustrated) so as to communicate therewith. In addition, the paper 6 is, for example, a plain paper or the like.

The acquisition part 8 acquires original image data 16 transmitted from, for example, the external terminal apparatus. The original image data 16 is, for example, multitone gray scale image data having an 8-bit tone value ("0" to "255"). As shown in FIG. 2A, the original image data 16 has a plurality of pixels 18 arranged in a matrix. Moreover, in the example shown in FIG. 2A, the original image data 16 contains a total of 256 pixels 18 in a 16×16 pixel array. Each of the plurality of pixels 18 has a pixel value of any of "0" to "255." Herein, the pixel 18 having the pixel value of "255" is a pixel having a tone value (i.e., a tone value of "255") of the most highlight side; the pixel 18 having the pixel value of "0" is a pixel having a tone value (i.e., a tone value of "0") of the most a shadow side.

The generation part 10 divides the original image data 16 into a plurality of regions 19 (19a, 19b, 19c and 19d), and carries out a halftone process in each of the regions 19. Moreover, each of the plurality of regions 19 contains, for example, a total of 64 pixels 18 in an 8×8 pixel array. The generation part 10 carries out the halftone process, and as a result, the binarized image data 4 is generated in which a large number of halftone dots (first halftone dots 20 and second halftone dots 22) are formed and the halftone dots contain one or a plurality of pixels to form a dot. The halftone process is, for example, an amplitude modulated (AM) halftone process by dithering using either the first dither matrix 24 or the second dither matrix 26 (described later) stored in the memory part 12.

Furthermore, in the binarized image data 4, a plurality of cells 30 are two-dimensionally arranged, in which the cells 30 are unit regions having either the first halftone dot 20 (an example of a first dot pattern) or the second halftone dot 22 (an example of a second dot pattern) formed therein.

As shown in FIG. 2B, the binarized image data 4 is halftone image data having a 1-bit tone value, and has a plurality of pixels 28 arranged in a matrix. Moreover, in the example shown in FIG. 2B, the binarized image data 4 contains a total of 256 pixels 28 in a 16×16 pixel array, similarly to the original image data 16. Each of the plurality of pixels 28 has a (binarized) pixel value of either "0" or "255."

Herein, the pixel 28 having the pixel value of "255" is a white pixel in which no dot is formed; the pixel 28 having the pixel value of "0" is a black pixel in which a dot is formed.

The opposite situation is also possible in the case of a negative/positive inverted image which has undergone a process of reversing white and black of the image. However, even in binarizing the negative/positive inverted image, only the left and right cells 30 are interchanged, and an image substantially the same as that of the present embodiment can be generated. Therefore, in the present embodiment, the case of the negative/positive inverted image does not need to be considered.

The plurality of cells 30 respectively correspond to the plurality of regions 19 in the original image data 16. That is, in the example shown in FIG. 2B, the plurality of cells 30 are arranged in a matrix of two rows and two columns, wherein each of the cells 30 contains, for example, a total of 64 pixels 28 in an 8×8 pixel array. Since the generation part 10 carries out the halftone process on the original image data 16, in each of the plurality of cells 30, either the first halftone dot 20 or the second halftone dot 22 is formed. As described later, the first halftone dot 20 and the second halftone dot 22 grow in different manners from each other if the tone value of each of all the pixels 18 contained in the region 19 in the original image data 16 changes from the highlight side to the shadow side. A method for forming the first halftone dot 20 and the second halftone dot 22 will be explained later in detail.

The memory part 12 is a memory for storing the first dither matrix 24 and the second dither matrix 26. As shown in FIG. 3A, the first dither matrix 24 is, for example, an 8×8 dither matrix for forming the first halftone dot 20. On the other hand, as shown in FIG. 3B, the second dither matrix 26 is, for example, an 8×8 dither matrix for forming the second halftone dot 22. The first dither matrix 24 and the second dither matrix 26 will be explained later in detail.

The printing part 14 prints, on to the paper 6, the binarized image data 4 generated by the generation part 10. Moreover, the printing part 14 forms a large number of first halftone dots 20 and second halftone dots 22 on the paper 6 by fixing a black toner to the paper 6. Since the large number of first halftone dots 20 and second halftone dots 22 are formed on the paper 6 in this way, the binarized image data 4 is printed onto the paper 6.

### 1-2. Method for Forming First Halftone Dot and Second Halftone Dot

Herein, the method for forming the first halftone dot 20 and the second halftone dot 22 by the generation part 10 is explained with reference to FIGs. 2A to 2B.

When the generation part 10 carries out the halftone process on the original image data 16, the first dither matrix 24 and the second dither matrix 26 are alternately used in a row direction (the transverse direction in FIG. 2A) of the original image data 16.

Specifically, each pixel value of 64 pixels 18 in the 8×8 pixel array contained in the upper left region 19a in the original image data 16 shown in FIG. 2A is compared with a threshold value (e.g., the value "15" at the upper left of FIG. 3A) of the first dither matrix 24 corresponding to the pixel 18. By this comparison, if the pixel value of the pixel 18 of the original image data 16 is equal to or greater than the corresponding threshold value of the first dither matrix 24, the pixel value is converted into "255"; if the pixel value of the pixel 18 of the original image data 16 is smaller than the corresponding threshold value of the first dither matrix 24, the pixel value is converted into "0." That is, by the halftone process using the first dither matrix 24, the pixel values of the pixels 18 contained in the original image data 16 are binarized into either "255" or "0." Accordingly, in an upper left cell 30a in the binarized image data 4 shown in FIG. 2B, the first halftone dot 20 having an area corresponding to a tone value of the upper left region 19a in the original image data 16 will be formed.

Similarly, when carrying out the halftone process on the original image data 16, the generation part 10 compares each pixel value of 64 pixels 18 in the 8×8 pixel array contained in the upper right region 19b in the original image data 16 shown in FIG. 2A with a threshold value of the second dither matrix 26 corresponding to the pixel 18. By this comparison, if the pixel value of the pixel 18 of the original image data 16 is greater than the corresponding threshold value of the second dither matrix 26, the pixel value is converted into "255;" if the pixel value of the pixel 18 of the original image data 16 is equal to or smaller than the corresponding threshold value of the second dither matrix 26, the pixel value is converted into "0." That is, by the halftone process using the second dither matrix 26, the pixel values of the pixels 18 contained in the original image data 16 are binarized into either "255" or "0." Accordingly, in an upper right cell 30b in the binarized image data 4 shown in FIG. 2B, the second halftone dot 22 having an area corresponding to a tone value of the upper right region 19b in the original image data 16 will be formed.

Similarly, when carrying out the halftone process on the original image data 16, the generation part 10 compares each pixel value of 64 pixels 18 in the 8×8 pixel array contained in the lower left region 19c in the original image data 16 shown in FIG. 2A with the threshold value of the second dither matrix 26 corresponding to the pixel 18. Accordingly, in a lower left cell 30c in the binarized image data 4 shown in FIG. 2B, the second halftone dot 22 having an area corresponding to a tone value of the lower left region 19c in the original image data 16 will be formed.

Similarly, when carrying out the halftone process on the original image data 16, the generation part 10 compares each pixel value of 64 pixels 18 in the 8×8 pixel array contained in the lower right region 19d in the original image data 16 shown in FIG. 2A with the threshold value of the first dither matrix 24 corresponding to the pixel 18. Accordingly, in a lower right cell 30d in the binarized image data 4 shown in FIG. 2B, the first halftone dot 20 having an area corresponding to a tone value of the lower right region 19d in the original image data 16 will be formed.

As shown in FIG. 2B, by the aforementioned halftone process, the first halftone dot 20 and the second halftone dot 22 will be alternately arranged side by side in the row direction (the transverse direction in FIG. 2B) of the plurality of cells 30. Moreover, a plurality of the first halftone dots 20 and the second halftone dots 22 will be alternately arranged side by side in a column direction (the longitudinal direction in FIG. 2B) of the plurality of cells 30. Furthermore, as shown in FIG. 2B, an adjacent pair of first halftone dots 20 are arranged side by side in a direction inclined 45° with respect to the row direction and the column direction respectively of the plurality of cells 30. Similarly, an adjacent pair of second halftone dots 22 are arranged side by side in a direction inclined 45° with respect to the row direction and the column direction respectively of the plurality of cells 30. In addition, as shown in FIG. 2B, the four cells 30a, 30b, 30c and 30d are arranged in point symmetry.

### 1-3. First Dither Matrix and Second Dither Matrix

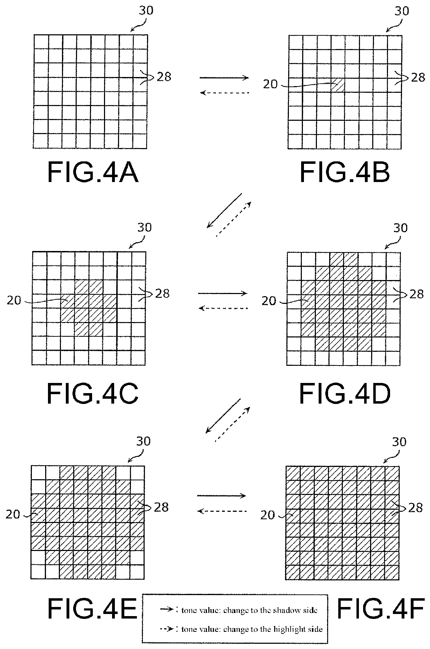

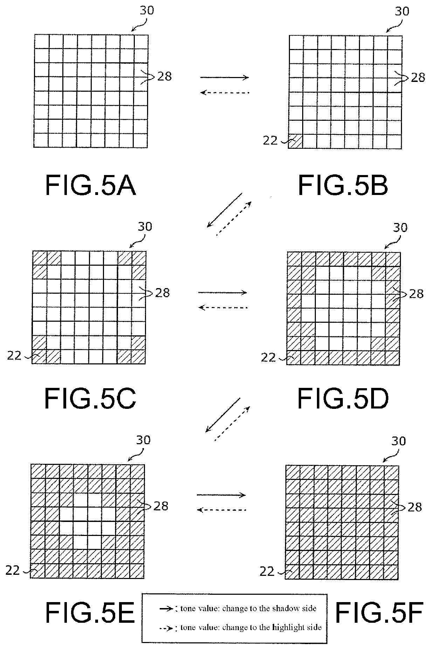

Next, the first dither matrix 24 and the second dither matrix 26 are explained with reference to FIG. 3A to FIG. 5F. FIGs. 4A to 4F show a manner of growth of the first halftone dot 20 according to an embodiment. FIGs. 5A to 5F show a manner of growth of the second halftone dot 22 according to an embodiment.

As shown in FIG. 3A and FIG. 3B, the first dither matrix 24 and the second dither matrix 26 have different threshold value arrangements from each other.

Specifically, as shown in FIGs. 4A to 4F, the first dither matrix 24 has a threshold value arrangement in which, if the tone value of each of all the pixels 18 contained in the region 19 in the original image data 16 changes from the most highlight side (see FIG. 4A) to the most shadow side (see FIG. 4F), the first halftone dot 20 grows from inside toward outside of the cell 30 in a constant cycle. Moreover, in this specification, the expression "the first halftone dot 20 grows" means that, the area of the first halftone dot 20 is formed so as to change in stages from an area (see FIG. 4A) of zero pixel 28 to an area of 64 pixels 28 (see FIG. 4F). Moreover, as shown in FIGs. 4C to 4E, the halftone dot 20 has a substantially circular shape.

On the other hand, as shown in FIGs. 5A to 5F, the second dither matrix 26 has a threshold value arrangement in which, if the tone value of each of all the pixels 18 contained in the region 19 in the original image data 16 changes from the most highlight side (see FIG. 5A) to the most shadow side (see FIG. 5F), the second halftone dot 22 grows from outside toward inside of the cell 30 in a constant cycle. In this specification, the expression "the second halftone dot 22 grows" means that, the area of the second halftone dot 22 changes in stages from the area (see FIG. 5A) of zero pixel 28 to the area of 64 pixels 28 (see FIG. 5F). Moreover, as shown in FIGs. 5C to 5E, a region in the cell 30 having no second halftone dot 22 formed therein has a substantially circular shape.

### 1-4. Flow of Process Performed by Printing Apparatus

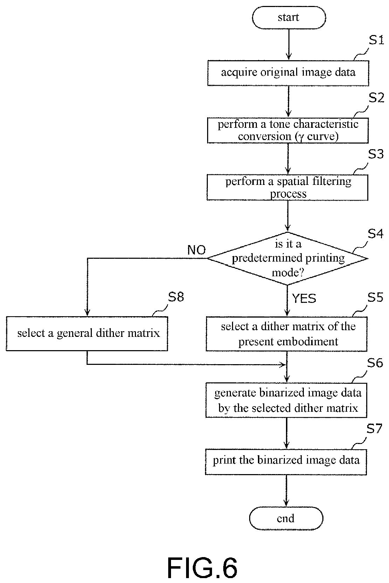

Next, a flow of a process (image processing method) performed by the printing apparatus 2 according to an embodiment is explained with reference to FIG. 6. FIG. 6 is a flowchart showing the flow of the process performed by the printing apparatus 2 according to an embodiment.

As shown in FIG. 6, first of all, the acquisition part 8 acquires the original image data 16 transmitted from, for example, the external terminal apparatus (S1). Then, the generation part 10 carries out a tone characteristic conversion (y curve) (S2) and a spatial filtering process (S3) in sequence on the original image data 16. Then, if the printing mode is a predetermined printing mode (i.e., a printing mode using a dither matrix of the present embodiment) (YES in S4), the dither matrix of the present embodiment is selected (S5). Then, the generation part 10 carries out the halftone process on the original image data 16 using the selected dither matrix, so as to generate the binarized image data 4 (S6). Then, the printing part 14 prints, on to the paper 6, the binarized image data 4 generated by the generation part 10 (S7).

Back to step S4, if the printing mode is not the predetermined printing mode (NO in S4), a general dither matrix is selected (S8). Moreover, the "general dither matrix" refers to a type of dither matrix arranged in a direction inclined 0° with respect to the row direction and the column direction. Then, steps S6 and S7 are carried out similarly to the above.

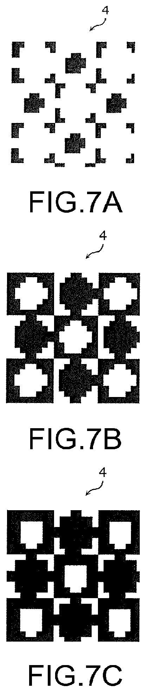

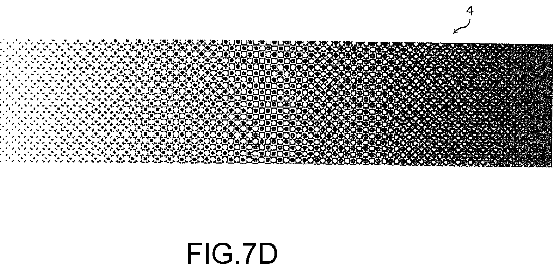

Herein, specific examples of the binarized image data 4 generated by the halftone process according to an embodiment are shown. FIG. 7A shows an example of the binarized image data 4 generated by carrying out the halftone process according to an embodiment on the original image data 16 in uniformly light gray and having a tone value of "200." FIG. 7B shows an example of the binarized image data 4 generated by carrying out the halftone process according to an embodiment on the original image data 16 in uniformly slightly dark gray and having a tone value of "100." FIG. 7C shows an example of the binarized image data 4 generated by carrying out the halftone process according to an embodiment on the original image data 16 in uniformly dark gray and having a tone value of "72." FIG. 7D shows an example of the binarized image data 4 generated by carrying out the halftone process according to an embodiment on the original image data 16 having a gradation pattern having a tone value continuously changing from "0" to "255."

Moreover, a size of the binarized image data 4 shown in each of FIGs. 7A to 7C is 4961 (W)×7016 (H), and the size of the binarized image data 4 shown in FIG. 7D is 600 (W)×750 (H).

In the binarized image data 4 shown in each of FIGs. 7A to 7C, cells of different types are arranged adjacent to each other, and cells of the same type are arranged in the direction inclined 45° with respect to the row direction and the column direction respectively. In addition, in the arrangements shown in FIGs. 7A to 7B, a plurality of cells are arranged in point symmetry. Furthermore, the binarized image data 4 shown in each of FIGs. 7A to 7C is image data composed of cells containing pixels defined by M×N, wherein in the binarized image data, with respect to a center of each cell, a first cell having relatively high outside pixel density and a second cell having relatively high inside pixel density are alternately arranged adjacent to each other.

As clear from FIGs. 7A to 7D, in the binarized image data 4, if the tone value of each of all the pixels 18 contained in the region 19 in the original image data 16 changes from the highlight side to the shadow side, two types of halftone dots (the first halftone dot 20 and the second halftone dot 22) growing in different manners from each other are formed in large numbers.

### 1-5. Effect

Next, effects obtained by the printing apparatus 2 according to an embodiment are explained. The inventors discovered that, as a distance between halftone dots in the binarized image data 4 increases, a feeling of roughness that occurs in the binarized image data 4 becomes stronger. As in the conventional halftone process explained in the part "Description of the Related Art," if each of the large number of halftone dots grows from inside toward outside of the cell 30 in a constant step cycle, since the distance between the halftone dots in the binarized image data 4 becomes relatively larger, the feeling of roughness that occurs in the binarized image data 4 may become stronger.

With respect to this, as described above, by the printing apparatus 2 according to an embodiment, the first halftone dot 20 and the second halftone dot 22 that grow in different manners from each other are formed in the binarized image data 4. Accordingly, as shown in FIG. 2B, a distance D between adjacent halftone dots in the binarized image data 4 can be changed. As a result, the feeling of roughness that occurs in the binarized image data 4 can be suppressed, and image quality of the binarized image data 4 can be improved.

Furthermore, as shown in FIG. 2B, since the first halftone dot 20 and the second halftone dot 22 having different shapes are alternately arranged in the row direction and the column direction of the plurality of cells 30, jitter noise caused by hardware can be reduced. Moreover, the "jitter noise" refers to a horizontal striped pattern that appears in an image.

### Variants

The above has explained the image processing apparatus according to the embodiments of the invention. However, the invention is not limited to these embodiments. For example, the above embodiments may be properly combined with each other.

For example, in the above embodiments, the printing apparatus 2 is configured as a laser printer. However, the printing apparatus 2 is not limited thereto, but may be configured as, for example, an inkjet printer or a multifunction peripheral (MFP) or the like. In the case where the printing apparatus 2 is configured as a multifunction peripheral, the acquisition part 8 will acquire the original image data 16 read by a scanner. In addition, in the case where the printing apparatus 2 is configured as a multifunction peripheral, the printing part 14, while reciprocally moving a recording head (not illustrated) in a direction substantially perpendicular to a conveyance direction of the paper 6, discharges black ink from the recording head to the paper 6 at proper timings, so as to form a large number of halftone dots on the paper 6.

For example, in the above embodiments, two types of halftone dots are formed in the binarized image data 4. However, the invention is not limited thereto, and three or more types of halftone dots, for example, may be formed.

For example, in the above embodiments, an adjacent pair of first halftone dots 20 are arranged side by side in the direction inclined 45° with respect to the row direction and the column direction respectively of the plurality of cells 30. However, the invention is not limited thereto, and the first halftone dots 20 may be arranged side by side in a direction inclined at an arbitrary angle (e.g., 30°). With regard to the second halftone dot 22, similarly, the second halftone dots 22 may be arranged side by side in a direction inclined at an arbitrary angle (e.g., 30°) with respect to the row direction and the column direction respectively of the plurality of cells 30.

In addition, a noise component may be intentionally added to each threshold value of the first dither matrix 24 and the second dither matrix 26 explained in the above embodiments. Accordingly, due to counterbalance between the noise component and a noise component caused by hardware, the image quality of the binarized image data 4 can be further improved.

### Other Variants

In addition, the above image processing apparatus may be configured as, specifically, a computer system including a microprocessor, a read-only memory (ROM), a random access memory (RAM), a hard disk drive, a display unit, a keyboard, a mouse and so on. The RAM or the hard disk drive stores a computer program therein. The microprocessor operates in accordance with the computer program, and thereby the image processing apparatus achieves its functions. Herein, the computer program is configured by combining a plurality of opcodes showing instructions to a computer in order to achieve a predetermined function.

Furthermore, a part of or all of the components that compose the above image processing apparatus may include a system large-scale integration (LSI). The system LSI is a supermultifunctional LSI manufactured by integrating a plurality of components on a chip, and includes, for example, a computer system including a microprocessor, a ROM, a RAM and so on. In this case, the computer program is stored in the ROM. The microprocessor operates in accordance with the computer program, and thereby the system LSI achieves its functions.

In addition, a field-programmable gate array (FPGA) that can be programmed after manufacture of the LSI, may be utilized for the integrated circuit.

Furthermore, a part of or all of the components that compose the above image processing apparatus may include an IC card or a single module detachable from the image processing apparatus. The IC card or the module is a computer system including a microprocessor, a ROM, a RAM and so on. The IC card or the module may include the above supermultifunctional LSI. The microprocessor operates in accordance with the computer program, and thereby the IC card or the module achieves its functions. The IC card or the module may have tamper resistance.

In addition, the invention may be the method shown above. In addition, the invention may be a computer program carrying out the method by a computer, or may be a digital signal including the above computer program.

Furthermore, the invention may record the above computer program or the above digital signal in a computer readable non-transitory recording medium such as, for example, a flexible disk, a hard disk, a CD-ROM, a magneto-optical drive (MO), a digital versatile disc (DVD), a DVD-ROM, a DVD-RAM, a Blu-ray® Disc (BD), a semiconductor memory or the like. In addition, the invention may be the above digital signal recorded in these non-transitory recording media.

In addition, the invention may transmit the above computer program or the above digital signal via a telecommunication line, a wireless or wired communication line, a network represented by the Internet, data broadcasting or the like.

In addition, the invention may be a computer system including a microprocessor and a memory, wherein the memory stores the above computer program, and the microprocessor operates in accordance with the above computer program.

In addition, the above computer program or the above digital signal may be recorded in the above non-transitory recording media to be transferred, or may be transferred via the above network or the like, so as to be carried out by another independent computer system.

The image processing apparatus of the invention may be applied as, for example, an inkjet printer or a laser printer.

### Reference Numerals

- 2:: image processing apparatus
- 4:: binarized image data
- 6:: paper
- 8:: acquisition part
- 10:: generation part
- 12:: memory part
- 14:: printing part
- 16:: original image data
- 18, 28:: pixels
- 19 (19a∼19d):: a plurality of regions
- 20:: first halftone dots
- 22:: second halftone dots 22
- 24:: first dither matrix
- 26:: second dither matrix
- 30 (30a∼30d):: cell
- S1~S8:: steps

## Claims

1. An image processing apparatus (2), **characterized in that** image processing apparatus (2) comprises:
a generation part (10), configured to generate a binarized image data (4), wherein the binarized image data comprises
a first cell, containing a first dot pattern in which an outside pixel density is higher than an inside pixel density; and
a second cell, containing a second dot pattern in which an inside pixel density is higher than an outside pixel density.

2. The image processing apparatus (2) according to claim 1, **characterized in that** in the binarized image data (4), the first dot pattern and the second dot pattern are alternately arranged.

3. The image processing apparatus (2) according to claim 1 or 2, **characterized in that** in the binarized image data (4), the first dot pattern and the second dot pattern are arranged adjacent to each other in a row direction and a column direction.

4. The image processing apparatus (2) according to any one of claims 1 to 3, **characterized in that** the binarized image data (4) contains the first dot patterns or the second dot patterns, and
the first or the second dot patterns are arranged at substantially 45°.

5. The image processing apparatus (2) according to any one of claims 1 to 4, **characterized in that** the binarized image data (4) contains the first dot patterns or the second dot patterns, and the first or the second dot patterns are arranged in point symmetry.

6. The image processing apparatus (2) according to any one of claims 1 to 5, **characterized in that** the binarized image data (4) contains the second dot patterns, and the second dot patterns are arranged in point symmetry.

7. The image processing apparatus (2) according to any one of claims 1 to 6, **characterized in that** the first dot pattern formed in the first cell has a substantially circular shape.

8. The image processing apparatus (2) according to any one of claims 1 to 7, **characterized in that** a region other than the second dot pattern formed in the second cell is a substantially circular shape.

9. An image processing apparatus (2), **characterized in that** image processing apparatus comprises
an acquisition part (8), configured to acquire a multitone original image data (16); and
a generation part (10), configured to divide the multitone original image data (16) into a plurality of regions (19a~19d), to generate a binarized image data (4) based on a plurality of dither matrices (24, 26) of multiple types having different threshold value arrangements in each of the regions (19a~19d).

10. The image processing apparatus (2) according to claim 9, **characterized in that**
based on the plurality of the dither matrices (24, 26), the generation part (10) generates the binarized image data (4) in which a plurality of dot patterns of multiple types are formed,
wherein when tone values of all pixels contained in the region change respectively from a highlight side to a shadow side, each of the plurality of the dot patterns grows in different manners from each other.

11. The image processing apparatus (2) according to claim 9 or 10, **characterized in that**
the binarized image data (4) has a plurality of cells (30a~30d) respectively corresponding to the plurality of the regions, and
the plurality of the dither matrices (24, 26) comprises:
a first dither matrix (24), forming a first dot pattern that grows from an inside toward an outside of the cell (30a~30d) when the tone value of each of all the pixels contained in the region changes from the highlight side to the shadow side; and
a second dither matrix (26), forming a second dot pattern that grows from the outside toward the inside of the cell (30a~30d) when the tone value of each of all the pixels contained in the region changes from the highlight side to the shadow side.

12. The image processing apparatus (2) according to claim 11, **characterized in that**
the plurality of the cells (30a~30d) are arranged in a matrix, and
the first dot patterns and the second dot patterns are alternately arranged side by side in a row direction and a column direction of the plurality of cells (30a~30d).

13. An image processing method for generating a binarized image data, **characterized in that** the method comprises:
acquiring a multitone original image data (S1); and
dividing the multitone original image data into a plurality of regions, and carrying out a halftone process in each of the regions using any of a plurality dither matrices of multiple types having different threshold value arrangements, to generate the binarized image data (S3-S6).

14. The image processing method according to claim 13, wherein the binarized image data comprises
a first cell, containing a first dot pattern in which an outside pixel density is higher than an inside pixel density; and
a second cell, containing a second dot pattern in which an inside pixel density is higher than an outside pixel density.

15. The image processing method according to claim 14, wherein
based on the plurality of the dither matrices, generating the binarized image data in which the first and the seond dot patterns are different types,
wherein when tone values of all pixels contained in the region change respectively from a highlight side to a shadow side, each of the plurality of the dot patterns grows in different manners from each other.
